# EUROPÄISCHE PATENTSCHRIFT

(11) **EP 1 886 088 B1**
(45) Veröffentlichungstag und Bekanntmachung des Hinweises auf die Patenterteilung: **12.09.2012**
(21) Anmeldenummer: 06753717.5
(22) Anmeldetag: 18.05.2006
(51) Int. Cl.: G01B 21/20

(54) **VERFAHREN ZUM PRÜFEN VON ZAHNRÄDERN WÄHREND IHRER HERSTELLUNG**
METHOD FOR TESTING GEAR WHEELS DURING THEIR PRODUCTION
PROCEDE POUR VERIFIER DES ROUES DENTEES PENDANT LEUR FABRICATION

(30) Priorität: 18.05.2005 DE 102005022863
(43) Veröffentlichungstag der Anmeldung: 13.02.2008
(73) Patentinhaber: LIEBHERR-VERZAHNTECHNIK GmbH, 87437 Kempten (DE)
(72) Erfinder: FINKENWIRTH, Klaus, 87648 Aitrang (DE); MEHR, Andreas, 87487 Ermengerst (DE)
(74) Vertreter: Laufhütte, Dieter
(86) Internationale Anmeldenummer: PCT/EP2006/004735
(87) Internationale Veröffentlichungsnummer: WO 2006/122812

(56) Entgegenhaltungen:
- DE-A1- 4 305 408
- DE-B- 1 258 609
- FR-A- 2 606 307

## Beschreibung

Die Erfindung betrifft ein Verfahren zum Prüfen von Zahnrädern während ihrer Herstellung in einer Verzahnungsmaschine (siehe z.B.DE 43 05 408 A1).

Neben zahlreichen Prüfkriterien ist die Bestimmung des Kugelmaßes eines der wichtigsten, da mittels des Kugelmaßes entschieden werden kann, ob das gefertigte Zahnrad ein Gutteil oder Ausschuss ist. Für eine prozesssichere Produktion sind die Überprüfung des Kugelmaßes und gegebenenfalls eine damit verbundene Maschinenkorrektur zwingend erforderlich. Die Bestimmung des Kugelmaßes ist nach DIN 3960 normiert. Es handelt sich hier um ein diametrales Prüfmaß für die Zahndicke.

Das Kugelmaß von Zahnrädern wird bei der Produktion stichprobenartig überprüft. Bei Steigerung der Prüfschärfe, d. h. bei der Steigerung der Anzahl der Werkstükke, die überprüft werden sollen, steigen der messtechnische und zeitliche Aufwand und natürlich die damit verbundenen Kosten. Grundsätzlich steht für die Bestimmung des Kugelmaßes eine Reihe von Messsystemen zur Verfügung, wobei die in der Praxis übliche Bandbreite von einfachen Handmessgeräten mit Micrometerschrauben über automatisierte Messsysteme in und an der Maschine bis zu 3D-Verzahnungsmessmaschinen in klimatisierten Messräumen reicht. Bei einer entsprechenden Bestimmung des Kugelmaßes muss also das zu prüfende Zahnrad jeweils aus der Verzahnungsmaschine herausgenommen und im Messraum vermessen werden, bevor gegebenenfalls Korrekturen an der Einstellung der Verzahnungsmaschine vorgenommen werden können.

Wenn eine entsprechende Abweichung des Kugelmaßes bei einem vermessenen Werkstück festgestellt wurde, ist es bei marktüblichen Verzahnungsmaschinen möglich, das Kugelmaß durch entsprechende Einstell- oder Bearbeitungsparameter an einzelnen Werkstücken exakt zu erreichen. Weiterhin bieten die meisten Maschinen eine manuelle oder automatische Korrekturfunktion, um auf Maßschwankungen zu reagieren und somit den Prozess möglichst stabil zu halten. Als Ursachen für die Maßschwankungen bzw. Abweichungen sind hauptsächlich das thermische Verhalten der Maschinen und der Werkzeugverschleiß zu nennen.

Aus der vorgenannten Verfahrensweise ergeben sich folgende Probleme: Bei Messung des Kugelmaßes in einem eigens dafür vorgesehenen klimatisierten Messraum ergibt sich das Problem, dass das erhaltene Messergebnis nicht produktionsnah zurückgeführt werden kann. Hierdurch ist eine lange Reaktionszeit für die notwendige Korrekturmaßnahme bedingt. Die veränderte Spannsituation führt beim Schleifen/Fräsen und beim Messen gegebenenfalls zu Messfehlern. Wird das Zahnrad mit Sensoren oder Tastern vermessen, wird der Werkzeugverschleiß nicht berücksichtigt und schließlich werden auch Werkzeugänderungen durch Abrichtvorgänge des Werkzeugs nicht exakt erfasst und gehen somit als Fehler in das Messergebnis und damit in die Maßkorrektur ein.

Aufgabe der vorliegenden Erfindung ist es nun, ein Verfahren zum Prüfen von Zahnrädern während ihrer Herstellung an die Hand zu geben, bei dem die Überprüfung möglichst automatisch erfolgt, wobei gleichzeitig eine automatische Korrektur des Sollzustandes ermöglicht sein soll.

Erfindungsgemäß wird diese Aufgabe durch die Kombination der Merkmale des Anspruchs 1 gelöst. Demnach wird erfindungsgemäß ein Verfahren zum Prüfen von Zahnrädern während ihrer Herstellung in der Verzahnungsmaschine mit folgenden Schritten an die Hand gegeben:
- Einfahren des Werkzeuges in eine vorhandene Zahnlücke an einen vorbestimmten Referenzpunkt an der Zahnflanke,
- Bestimmen der Lückenbreite durch tangentiales Bewegen des Werkzeugzahnes in der Zahnlücke, oder umgekehrt
- Errechnen des Zahnweitenmaßes,
- Bestimmen der Differenz zwischen tatsächlichem und theoretischem Zahnweitenmaß und
- Errechnen des Achsabstandsfehlers aus der zuvor bestimmten Differenz.

Bevorzugte Ausgestaltungen der Erfindung ergeben sich aus den sich an den Hauptanspruch anschließenden Unteransprüchen.

Demnach kann der ermittelte Achsabstandsfehler in einer Regelschleife an die Steuerung der Verzahnungsmaschine zurückgeführt werden, um den Achsabstandsfehler durch die Steuerung zu korrigieren.

Das Werkzeug kann in bestimmten Zeitpunkten an einen Referenzpunkt angefahren werden. Sollten hier Abweichungen festgestellt werden, sind diese durch Abnutzung des Werkzeugs bedingt. Diese Abweichungen können ebenfalls durch die Steuerung ausgeglichen werden.

Als Referenzpunkt kann ein eingespanntes Zahnrad dienen, das im Kugelmaß zuvor mittels einer unabhängigen Messung bestimmt wurde. Alternativ kann als Referenzpunkt eine in der Werkzeugmaschine zugeordnete Referenzlücke bekannter Abmessung dienen. Die Zahl der in der Verzahnungsmaschine automatisch abgefahrenen Prüfpunkte kann statistisch ausgewählt sein. Insbesondere können sie während des Anlaufens der Verzahnungsmaschine, in der aufgrund der thermischen Veränderung starke Abweichungen auftreten, häufiger Messungen vorgenommen werden als im eingelaufenen Zustand.

Mit dem erfindungsgemäßen Verfahren kann unmittelbar mit Hilfe des Werkzeuges das Kugelmaß von Zahnrädern erfasst werden und es können die Abweichungen vom Sollzustand automatisch korrigiert werden. Durch eine entsprechend gewählte Messstrategie während des Herstellprozesses können maschinenbedingte Maßabweichungen in einfacher Weise korrigiert werden. Das erfindungsgemäße Verfahren kann in vorteilhafter Weise beim Fräsen und Schleifen angewendet werden. Beim Schleifen können abrichtbare und nicht abrichtbare Schleifwerkzeuge verwendet werden. Im letzteren Fall kann, wie zuvor dargestellt, die Referenz der Werkzeugstellung durch letzte Gleichteile nach dem Abrichten erfolgen. Die Nullpunkt-Einstellung des Werkzeuges kann aber auch mittels einer Referenzlücke eingestellt werden. Das Verfahren lässt sich nicht nur für Werkzeug und Werkstück mit üblichen Wälzbedingungen anwenden, sondern auch bei einer Abrichtscheibe, mit der beispielsweise eine Schnecke bearbeitet wird.

Weitere Einzelheiten und Vorteile der Erfindung ergeben sich aus der anhand der beigefügten Skizze erläuterten Messstrategie.

Mit 10 ist ein Teil eines Zahnrades bezeichnet, das eine Zahnflanke 12 in Form einer Evolvente aufweist. Die Zahnflanken 12 des Zahnrades 10 werden mittels eines Werkzeuges 14, beispielsweise einer Schleifscheibe oder einem Schneckengang, bearbeitet. Innerhalb der Zahnlücke 16 sind zwei Messtiefen angedeutet, nämlich die Messtiefe 1 und die Messtiefe 2. Aufgrund der Formgebung der Zahnflanken 12 gilt für die Messtiefe 1, dass der Abstand zwischen A1 und B1 größer ist als der Abstand zwischen den Punkten A2 und B2 in der Messtiefe 2. Da zu jedem Punkt auf der Evolvente der Abstand zur Lückenmitte der Zahnlücke 16 bekannt ist, ist auch der radiale Zustellbetrag des Werkzeuges der Messtiefe 1 und der Messtiefe 2, nämlich Δx, bekannt. Δx entspricht dem Achsabstandsfehler des Werkzeuges 14, der durch die Prüfmessung des Abstands der Zahnflanken und die ermittelte Abweichung von einem vorgegebenen Sollwert ermittelbar ist.

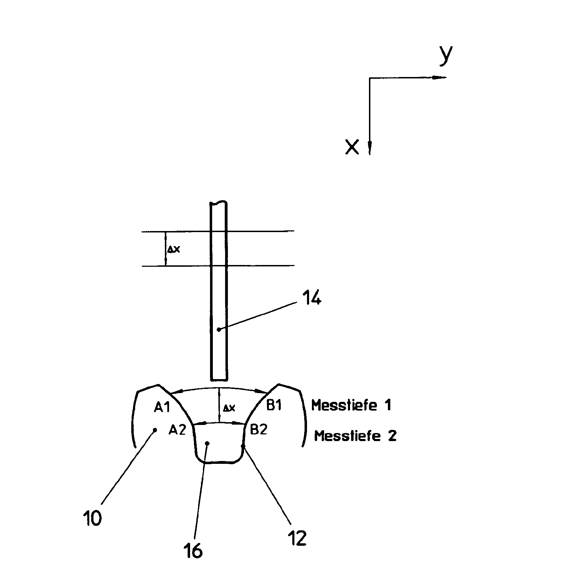

## Patentansprüche

1. Verfahren zum Prüfen von Zahnrädern (10) während ihrer Herstellung in der Verzahnungsmaschine mit folgenden Schritten:
- Einfahren des Werkzeuges (14) der Verzahnungsmaschine in eine vorhandene Zahnlücke an einen vorbestimmten Referenzpunkt an der Zahnflanke (12),
- Bestimmen der Lückenbreite durch tangentiales Bewegen des Werkzeugzahnes in der Zahnlücke, oder umgekehrt
- Errechnen des Zahnweitenmaßes,
- Bestimmen der Differenz zwischen tatsächlichem und theoretischem Zahnweitenmaß und
- Errechnen des Achsabstandsfehlers (Δx) aus der zuvor bestimmten Differenz.

2. Verfahren nach Anspruch 1, **dadurch gekennzeichnet, dass** der Abstandsfehler (Δx) in einer Regelschleife an die Steuerung der Verzahnungsmaschine zurückgeführt wird und dass der Abstandsfehler durch die Steuerung korrigiert wird.

3. Verfahren nach Anspruch 1 oder 2, **dadurch gekennzeichnet, dass** das Werkzeug (14) zu vorbestimmten Zeitpunkten an einen Referenzpunkt angefahren wird.

4. Verfahren nach Anspruch 3, **dadurch gekennzeichnet, dass** ein beispielsweise durch Abnutzung des werkzeugs (14) entstandener Abstandsfehler durch die Steuerung ausgeglichen wird.

5. Verfahren nach einem der Ansprüche 1 bis 4, **dadurch gekennzeichnet, dass** als Referenzpunkt ein eingespanntes Zahnrad dient, dessen Kugelmaß zuvor mittels einer unabhängigen Messung bestimmt wurde.

6. Verfahren nach einem der Ansprüche 1 bis 4, **dadurch gekennzeichnet, dass** als Referenzpunkt eine in der Werkzeugmaschine angeordnete Referenzlükke bekannter Abmessung dient.

7. Verfahren nach einem der Ansprüche 1 bis 6, **dadurch gekennzeichnet, dass** die Prüfabstände statistisch gewählt sind.

8. Verfahren nach Anspruch 7, **dadurch gekennzeichnet, dass** während des Anlaufens der Verzahnungsmaschine die Prüfabstände kürzer gewählt sind als im eingelaufenen Zustand.

## Claims

1. A method of inspecting gears (10) during their manufacture in the gear cutting machine comprising the following steps:
- traveling the tool (14) of the gear cutting machine into an existing tooth gap at a predetermined reference point of the tooth flank (12);
- determining the gap width by tangentially moving the tool tooth in the tooth gap, or vice versa;
- calculating the base tangent length;
- determining the difference between the actual and the theoretical base tangent length; and
- calculating the center distance error (Δx) from the previously determined difference.

2. A method in accordance with claim 1, **characterized in that** the distance error (Δx) is traced to the control of the gear cutting machine in a control loop; and **in that** the distance error is corrected by the control.

3. A method in accordance with either of claims 1 or 2, **characterized in that** the tool (14) is traveled to a reference point at predetermined points in time.

4. A method in accordance with claim 3, **characterized in that** a distance error caused, for example, by wear of the tool (14) is compensated by the control.

5. A method in accordance with any one of the claims 1 to 4, **characterized in that** a clamped gear whose dimension over balls was previously determined by means of an independent measurement serves as the reference point.

6. A method in accordance with any one of the claims 1 to 4, **characterized in that** a reference gap of known dimension arranged in the machine tool serves as the reference point.

7. A method in accordance with any one of the claims 1 to 6, **characterized in that** the inspection intervals are selected statistically.

8. A method in accordance with claim 7, **characterized in that** the inspection intervals are selected to be shorter during the start up of the gear cutting machine than in the run-in state.

## Revendications

1. Procédé de contrôle de roues dentées (10) pendant leur fabrication dans la machine à tailler les engrenages avec les étapes suivantes :
- Positionnement de l'outil (14) de la machine à tailler les engrenages dans un entredent existant sur un point de référence prédéterminé sur le flanc de la dent (12),
- Détermination de la largeur d'intervalle par mouvement tangentiel de la dent d'outil dans l'entredent, ou inversement
- Calcul de la cote d'écartement sur dents,
- Détermination de la différence entre la cote d'écartement sur dents réelle et celle théorique et
- Calcul de l'erreur d'entraxe (Δx) à partir de la différence déterminée auparavant.

2. Procédé selon la revendication 1, **caractérisé en ce que** l'erreur d'entraxe (Δx) est ramenée dans une boucle de régulation à la commande de la machine à tailler les engrenages et **en ce que** l'erreur d'entraxe est corrigée par la commande.

3. Procédé selon la revendication 1 ou 2, **caractérisé en ce que** l'outil (14) est percuté à des moments prédéterminés sur un point de référence.

4. Procédé selon la revendication 3, **caractérisé en ce qu'**une erreur d'entraxe survenue par exemple par usure de l'outil (14) est compensée par la commande.

5. Procédé selon une quelconque des revendications 1 à 4, **caractérisé en ce qu'**une roue dentée serrée sert de point de référence, dont la cote sur billes a été déterminée auparavant au moyen d'une mesure indépendante.

6. Procédé selon une quelconque des revendications 1 à 4, **caractérisé en ce qu'**un intervalle de référence disposé dans la machine à tailler les engrenages et de dimension connue sert de point de référence.

7. Procédé selon une quelconque des revendications 1 à 6, **caractérisé en ce que** les intervalles de contrôle sont sélectionnés statistiquement.

8. Procédé selon la revendication 7, **caractérisé en ce que**, pendant le démarrage de la machine à tailler les engrenages, les intervalles de contrôle sont sélectionnés plus courts qu'à l'état rodé.
